(19) Europäisches Patentamt
European Patent Office
Office européen des brevets

(11) Publication number : **0 479 409 B1**

(12) **EUROPEAN PATENT SPECIFICATION**

(45) Date of publication of patent specification : **27.07.94 Bulletin 94/30**

(51) Int. Cl.[5] : **F16B 33/06,** C23C 8/80, C23C 8/26

(21) Application number : **91303598.6**

(22) Date of filing : **22.04.91**

(54) **Austenitic stainless steel screw and a method for manufacturing the same.**

(30) Priority : **04.10.90 JP 267729/90**

(43) Date of publication of application : **08.04.92 Bulletin 92/15**

(45) Publication of the grant of the patent : **27.07.94 Bulletin 94/30**

(84) Designated Contracting States : **AT BE CH DE DK ES FR GB IT LI NL SE**

(56) References cited :
**EP-A- 0 408 168**
**DE-A- 3 235 447**
**FR-A- 2 155 078**
**FR-A- 2 404 142**
**US-A- 2 263 527**
**US-A- 4 975 147**
**PATENT ABSTRACTS OF JAPAN vol. 007, no. 181 (C-180)10 August 1983**

(73) Proprietor : **DAIDOUSANSO CO., LTD.**
**20-16, Higashishinsaibashi 1-chome, Chuo-ku**
**Osaka-shi, Osaka 542 (JP)**

(72) Inventor : **Tahara, Masaaki**
**3-4, Miyanokawahara, 5-chome**
**Takatsuki-shi, Osaka 569 (JP)**
Inventor : **Kitano, Kenzo**
**1498-1, Oyamadacho**
**Kawachinagano-shi, Osaka 586 (JP)**
Inventor : **Senbokuya, Haruo**
**3-306-404, Fujisawadai, 1-chome**
**Tondabayashi-shi, Osaka 584 (JP)**
Inventor : **Minato, Teruo**
**38-2, Shiroyamadai 3-chome**
**Hashimoto-shi, Wakayama 648 (JP)**

(74) Representative : **Marlow, Nicholas Simon et al**
**Reddie & Grose**
**16, Theobalds Road**
**London WC1X 8PL (GB)**

EP 0 479 409 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an austenitic stainless steel screw which has excellent corrosion resistance and to a method for manufacturing the same

Generally, austenitic stainless steel is higher in corrosion resistance to acid or salt compared with carbon steel. However, in surface hardness and strength, it is inferior to carbon steel. Therefore, it is not satisfactory to use this stainless steel for the manufacture of a screw which needs to be able to tighten to an iron-based plate by self-tapping, such as a tapping screw, a self-drilling screw or a dry wall screw. For these purposes, plated carburized iron articles or 13 Cr stainless steel articles are used. These articles are not only inferior in oxidation resistance (rust resistance) to austenitic stainless steel articles but are also inferior in their tightening function because of corrosion of their base material by acid rain, one of the major environmental problems today. Austenitic stainless steel articles are far superior in acid resistance. Accordingly the inventors provided technology for maintaining the tapping property of screws equal to that of iron articles by nitriding-hardening the austenitic stainless steel (Japanese Patent Application No. 177660/1989, EP-A-0408168). According to this technology, a hard layer which can drill an iron plate having suitable thickness and self-tap can be formed around the periphery of a stainless steel screw. Although the surface hard layer (15 - 50μm) of the thus obtained hardened layer is ultra-hard, it may not have sufficient corrosion resistance to rust and acid, so that it will rust easily. According to the inventors' research, it was found that part of the hardened layer under the ultra-hard surface layer had the same corrosion resistance as the stainless steel base material and did not suffer problems from acid rain as iron articles and 13Cr articles do. It is not preferable to change the color of the visible part of a screw, especially a screw head seen after tightening. To solve these problems, it was proposed to apply methods such as nitriding while masking the screw head with copper-plating, or in which the screw head of an austenitic stainless steel is joined with a threaded part made of iron carburized material by welding. However, there are disadvantages, in that masking by partial copper-plating of the former method is troublesome and costly and the plurality of materials used in the latter method are costly. It is possible to plate with Ni-Zn, Zn or Ni wholly in order to prevent rusting of the ultra hard layer of the nitrided surface. Since most platings are vulnerable to sulphuric acid, the possibility of the generation rust by acid rain cannot be excluded, especially in the case of screws used outside. Therefore, plating itself is effective in respect of smoothness and maintaining aesthetic appearance, but is not satisfactory in rust prevention.

According to the invention there is provided a hard austenitic stainless steel screw characterized in that a hard nitrided layer comprising an ultra hard surface layer and an inner hard layer beneath contiguous with a core part of the screw is disposed on the surface of an austenitic stainless steel screw, and in that a predetermined part of the ultra hard surface layer of the hard nitrided layer is removed to leave only the inner hard layer contiguous with the core part.

Also according to the invention there is provided a method for manufacturing a hard austenitic stainless steel screw comprising: heating austenitic stainless steel screw base material in a nitriding atmosphere to form the surface layer into a hard nitrided layer comprising an ultra hard suface layer and an inner hard layer beneath contiguous with a core part of the screw; and removing the ultra hard surface layer from a predetermined part of the hard nitrided layer to expose the inner hard layer contiguous with the core part.

The inner hard layer is preferably a metal composition layer which is about 20% harder than the core part of the stainless steel base material.

The inventors have discovered that the nitrided layer of an austenitic stainless steel screw comprises two layers, an ultra hard suface layer and an inner hard layer beneath, that the ultra hard surface layer comprises intermetallic compounds such as CrN, $Cr_2N$ and $Fe_{2-3}$, that the inner hard layer is a solid solution in which N, C, Fe-C are solid soluble with austenite of the core part. They have now found that if the ultra hard surface layer is eliminated to expose the inner hard layer beneath the ultra hard surface layer, rusting is prevented without losing much of the surface hardness and strength since rust is generated only on the ultra hard surface layer.

This invention allows exposure of the inner hard layer connected to the core by removing the ultra hard surface layer of the nitrided layer formed on the surface of an austenitic stainless steel screw. In general, the ultra hard surface layer has a thickness of 15 to 50μm and a surface hardness (Hv) of 1200 to 1400, and the inner hard layer has a thickness of 30 to 150μm and a surface hardness (Hv) of 320 to 650. The inner hard layer is far higher in surface hardness and almost the same in corrosion resistance to acid and base compared with the austenitic stainless steel which is the base material.

The invention will be further described, by way of example, with reference to the drawings in which:

Fig. 1 is a cross-sectional view of a treatment furnace;

Fig. 2 is a cross-sectional view of a hard austenitic stainless steel screw showing a nitrided layer;

Fig. 3 is a cross-sectional view of the screw of Fig. 2 with the ultra hard surface layer removed;
Fig. 4 shows a nitrided layer of a dry wall screw head;
Fig. 5 shows a nitrided layer of a screw thread part; and
Fig. 6 shows an anode polarization curve diagram.

In a preferred method of the invention, a screw is made of austenitic stainless steel base material. After nitriding as mentioned above, only a surface layer (the ultra hard surface layer) of the nitrided layer is removed. The removal is conducted chemically or mechanically. Chemically, the ultra hard surface layer of a predetermined part of the screw, for example, the screw head, is dipped in strong acid such as $HF$-$HNO_3$, or aqua regia for 2 to 30 , preferably 2 to 15, minutes. Mechanically, the part is mechanically scoured or the like. For uniform removal, the chemical method is preferable. In addition to the screw head, it is preferable to remove the ultra hard surface layer of the threaded part provided that the removal does not affect the tightening function of the screw.

In detail, a hard austenitic stainless steel screw according to the present invention can be manufactured as mentioned below. That is, austenitic stainless steel base material (hereinafter called steel material) is held firstly in an atmosphere containing fluorine or fluoride-containing gas to form a fluorinated layer on the steel surface, then heated in a nitriding atmosphere to remove the fluorinated layer and to form, at the same time, the surface layer of the steel material into a nitrided layer. The ultra hard surface layer of the formed nitrided layer is removed to prevent rust.

The term "fluorine- or fluoride-containing gas" as used in the above-mentioned pretreatment prior to nitriding means a dilution of at least one fluorine source component selected from among $NF_3$, $BF_3$, $CF_4$, HF, $SF_6$ and $F_2$ contained in an inert gas such as $N_2$. Among these fluorine source components, $NF_3$ is most suitable since it is superior in reactivity, ease of handling and other aspects to the others. As mentioned previously, steel works are held in the above-mentioned fluorine- or fluoride-containing gas atmosphere at a temperature of, for example, 250 to 400°C in the case of $NF_3$, as a preliminary treatment of the steel surface, and then subjected to nitriding (or carbonitriding) using a known nitriding gas such as ammonia. When $F_2$ gas alone or a mixed gas composed of $F_2$ gas and an inert gas, for example, is used as the fluorine- or fluoride-containing gas, the above-mentioned holding temperature is in the range of 100°C to 250°C. The concentration of the fluorine source component, such as $NF_3$, in such fluorine- or fluoride-containing gas should be, for example, 1,000-100,000 ppm, preferably 20,000-70,000 ppm, more preferably 30,000-50,000 ppm. The holding time in the fluorine- or fluoride-containing gas atmosphere will be appropriately selected depending on the steel species, geometry and dimensions of the works, heating temperature and so forth, and will generally be within the range of ten minutes to a few score minutes.

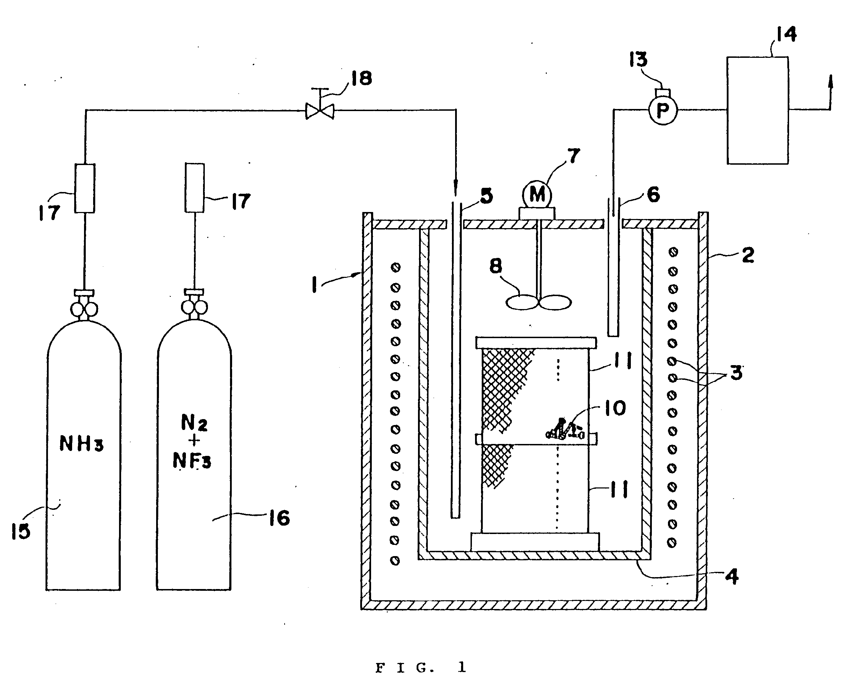

To illustrate the pretreatment and nitriding using fluorine- or fluoride- containing gas, reference is made to Fig. 1. Austenitic stainless steel screws, for instance, are cleaned to degrease them and then charged into a heat treatment furnace 1. This furnace 1 is a pit furnace comprising an inner vessel 4 surrounded by a heater 3 disposed within an outer shell 2, with a gas inlet pipe 5 and an exhaust pipe 6 inserted therein. Gas supply is from cylinders 15 and 16 via flow meters 17, a valve 18 and so on and via the gas inlet pipe 5.

The internal atmosphere is stirred by a fan 8 driven by a motor 7. Works 10 placed in a metal container 11 are charged into the furnace. In Fig. 1, the reference numeral 13 indicates a vacuum pump and 14 a noxious substance eliminator. A fluorine- or fluoride-containing reaction gas, for example, a mixed gas composed of $NF_3$ and $N_2$, is introduced into this furnace and heated, together with the works, at a specified reaction temperature. At a temperature of 250-400°C, $NF_3$ evolves fluorine in the nascent state, whereby the organic and inorganic contaminants on the steel work surface are eliminated therefrom. At the same time this fluorine rapidly reacts with the base elements Fe and chromium on the surface and/or with oxides occurring on the steel work surface, such as FeO, $Fe_3O_4$ and $Cr_2O_3$. As a result, a very thin fluorinated layer containing such compounds as $FeF_2$, $FeF_3$, $CrF_2$ and $CrF_4$ in the metal composition is formed on the surface, for example as follows:

$$FeO + 2F \rightarrow FeF_2 + 1/2\ O_2$$

$$Cr_2O_3 + 4F \rightarrow 2CrF_2 + 3/2\ O_2$$

These reactions convert the oxidised layer on the work surface to a fluorinated layer. At the same time, $O_2$ adsorbed on the surface is removed therefrom. Where $O_2$, $H_2$ and $H_2O$ are absent, the fluorinated layer is stable at temperatures up to 600°C and can prevent oxidized layer formation on the metal bases and adsorption of $O_2$ thereon until the subsequent step of nitriding. A fluorinated layer, which is similarly stable, is formed on the furnace surface as well and minimizes the damage to the furnace surface.

The works thus treated with the fluorine- or fluoride-containing reaction gas are then heated at a nitriding temperature of 480°C-700°C. Upon addition of $NH_3$ or a mixed gas composed of $NH_3$ and a carbon source gas (e.g. RX gas) in the heated condition, the fluorinated layer undergoes reduction or destruction by means of $H_2$ or a trace amount of water to give an active metal base, as shown, for example, by the following reaction equations:

$$CrF_4 + 2H_2 \rightarrow Cr + 4HF$$
$$2FeF_3 + 3H_2 \rightarrow 2Fe + 6HF$$

Upon formation of such an active metal base, active N atoms are adsorbed thereon, then enter the metal structure and diffuse therein and, as a result, a layer, the nitrided layer containing such nitrides as CrN, $Fe_2N$ and $Fe_4N$ is formed on the surface.

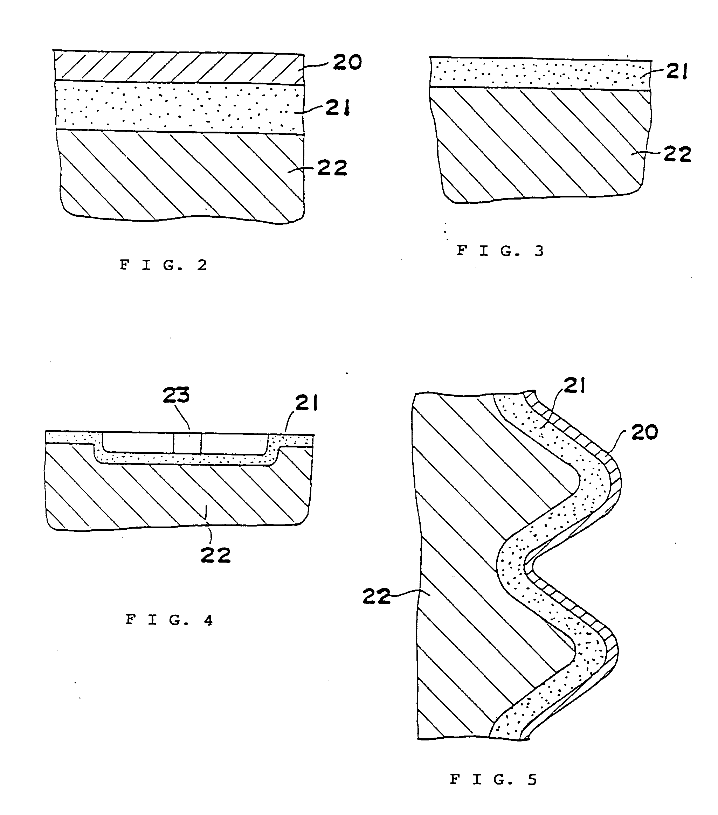

The nitrided layer so obtained is formed comprising an ultra hard surface layer 20 and an inner hard layer 21 beneath as shown in Fig. 2. Reference numeral 22 refers to an austenitic stainless steel base material (the core part). In this invention, the ultra hard surface layer 20 of for example the screw head is removed to expose the inner hard layer 21 on the surface of the screw as shown in Fig. 3. The removal is, for example, conducted by heating a $HNO_3$-HF solution at about 50°C, dipping a predetermined part, for example, the screw head of the stainless steel screw therein for about 10 to 120 minutes to melt and remove the ultra hard surface layer and to expose the inner hard layer beneath the ultra hard surface layer. As mentioned before, the ultra hard surface layer has a thickness of 15 to 50 μm. To remove the layer, it is preferred to dip it in a concentrated solution of for example the aforementioned acid. In some cases, removal may be conducted by scouring with a scourer or the like. The ultra hard surface layer is removed in this way to expose the inner hard layer beneath. The inner layer is 30 to 150 μm in thickness and is inferior to the ultra hard surface layer, but far superior to stainless steel base material, in surface hardness and strength. Its corrosion resistance is as excellent as that of austenitic stainless steel. Therefore, rust is not generated by acid rain or the like.

That is, the austenitic stainless screw obtained by the above-mentioned method has the same properties as iron articles in tapping and tightening functions, and has good corrosion resistance against acid and salt.

The invention will be further described by the following examples:

Example 1

A cross recessed head dry wall screw of SUS316 stainless steel works (4 X 25, cross recessed flat head screw) were cleaned with trichloroethylene, then charged into a treatment furnace 1 as shown in Fig. 1, and held at 380°C for 15 minutes in an $N_2$ gas atmosphere containing 5,000 ppm of $NF_3$, then heated at 530°C, and nitriding treatment was carried out at that temperature for 3 hours while a mixed gas composed of 50% $NH_3$ plus 50% $N_2$ was introduced into the furnace. The works were then air-cooled and taken out of the furnace.

The nitrided layer of each work thus obtained was uniform in thickness. The surface hardness was 1,250-1,350 Hv while the base material portion had a hardness of 250-260 Hv.

Next, a part from the end of the stainless steel work, the dry wall screw head, to 10mm from the end was dipped in 15% $HNO_3$- 5%HF solution (50°C) for 20 minutes to remove the ultra hard surface layer in the nitrided layer.

The surface hardness of the thus obtained stainless steel work was measured at the head part, from which the ultra hard surface layer is removed, and at other parts separately. The results are reported in Table 1.

Table 1

| | Ultra hard surface layer (Screw thread part) | Removed part (Head part) |
|---|---|---|
| Hardness of the surface (Hv) | 1280-1380 | 380-580 |

Upon observing the cross section of the stainless steel work by photomicrograph, the screw thread part with the ultra hard surface layer remaining was seen to comprise two nitrided layers, an ultra hard surface layer 20 and an inner hard layer 21 beneath as shown in Fig. 5, while the head part with its ultra hard surface layer removed consisted of only one nitrided layer, the inner hard layer 21 as shown in Fig. 4. In Fig. 4, the reference numeral 23 is a cross recess.

Furthermore, an accelerated corrosion test was conducted to the thus obtained stainless steel work, a dry wall screw. First, a screw is cut at 5mm below the top of its head to divide it into a screw head and a threaded part, then a neutral salt spray test was carried out on each separately. The results are shown in Table 2.

Table 2

| | |
|---|---|
| Head part surface | No change was seen after 500 hours |
| Threaded part | Rust present after 4 hours |

That is, the screw head with its ultra hard surface layer removed did not rust or the like after conducting an accelerated corrosion test for 500 hours, while, in contrast, the screw thread part rusted after 4 hours.

In the stainless steel work, a dry wall screw, the surface hardness and strength of the head part is a little lower than that of the thread part, but since surface hardness and strength of the thread part is maintained at a high level, the screw has self-tapping and drill-tightening properties which are not given by an ordinary stainless steel screw against a light gauge steel.

Example 2

A plurality of austenitic stainless steel hexagon head self-drilling screws 4x20mm (XM7) and SUS 316 plate material (25 X 35 x 1mm$^t$) were prepared, cleaned with acetone, charged in the furnace shown in Fig. 1, held in an $N_2$ atmosphere containing 5,000ppm of $NF_3$ at 400°C for 15 minutes, then at a temperature of 530°C, held in $N_2$ + 90% $H_2$ for 30 minutes, nitrided at that temperature in a 20% $NH_3$ + 80% RX atmosphere for 5 hours, and taken out of the furnace.

As for a drilling screw, a portion from the head end of the screw head to 10mm from the end, and as for plate material the whole part, was dipped in strong acid (hydrochloric acid 1 + nitric acid 3) diluted twice (at a temperature of 45°C) for 20 minutes, taken out and washed. The whole of the drilling screw was then plated with Ni-Zn for smoothness. The screwing property was determined on the basis of the JIS screwing test.

The screwing test on the drilling screw was conducted on 20 samples by screwing them into a steel (SPCC) plate with thickness 2.3mm. The average screwing time was 2.12 seconds. The time was almost the same as that of the portion not dipped (from the head end to 10mm therefrom) in a $HNO_3$-HF solution.

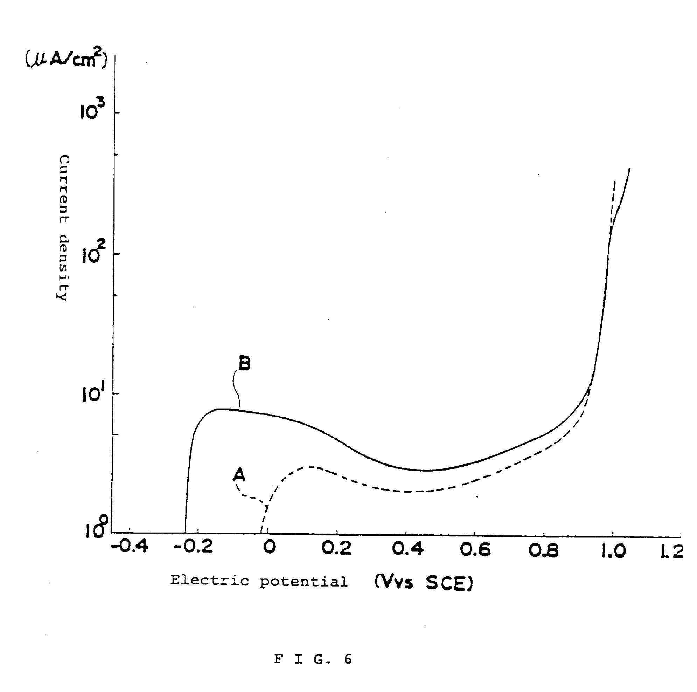

As for the plate material, anode polarization data in 5% $H_2SO_4$ solution was taken. The results are shown in Fig. 6. As shown by a curve A, a part from which the ultra hard surface layer was removed by soaking in acid shows almost similar corrosion resistance to a base material surface indicated by a curve B.

Example 3

An austenitic stainless steel tapping screw (4X12mm) and small screws (4X13mm) were charged into a furnace shown in Fig. 1 and held at 200°C in an atmosphere containing 1% $F_2$ for 40 minutes, then heated to 550°C and nitrided at that temperature in 30% $NH_3$ + 10% $CO_2$ + 60% RX gas atmosphere for five hours. The treatment then proceded as in Example 2. As a result of conducting weatherability test by the CASS test method on those screws, no rust formed even after 700 hours, while in cemented iron articles (Ni-Zn plating) and 13 Cr stainless steel articles, white and red rust appeared within 24 hours.

As mentioned above, in an austenitic stainless steel screw according to the present invention, an ultra hard surface layer of a screw head part is removed from its nitrided layer to expose an inner hard layer because the ultra hard surface layer comprising intermetallic compound such as CrN, $Cr_2N$ and $Fe_{2-3}$ easily rusts. The inner hard layer comprises solid solution layer in which N, C and the like are solid soluble with the stainless steel base material and does not rust and has high surface hardness and strength. Therefore, in the austenitic stainless steel screw the head part does not rust when exposed to acid rain and the like. The thread part thereof does not have its ultra hard surface layer removed, so that the surface hardness and strength are almost the same as those of carbon steel products to impart to the screw self-tapping and self-tightening properties. In an austenitic stainless steel screw, since the base material itself has high corrosion resistance and the inner hard layer is rust preventive, even if rust is generated on the ultra hard surface layer in the nitrided layer, it will not extend to the whole of the screw nor affect its strength.

Since the austenitic stainless steel works as mentioned above are held in an atmosphere containing fluorine- or a fluoride-containing gas to form a fluorinated layer on the surface prior to nitriding, and are nitrided in that state, a nitrided layer is formed uniformly and deeply to give a hard austenitic stainless steel screw having good surface properties.

The invention accordingly provides a hard austenitic stainless steel screw which has the same drilling, tapping and tightening properties as iron articles and its head, which is visible after tightening, is as corrosion resistant as the austenitic base material, and a method for manufacturing the same.

## Claims

1. A hard austenitic stainless steel screw characterized in that a hard nitrided layer comprising an ultra hard surface layer (20) and an inner hard layer (21) beneath contiguous with a core part (22) of the screw is disposed on the surface of an austenitic stainless steel screw, a predetermined part of the ultra hard surface layer of the hard nitrided layer having been removed to leave only the inner hard layer contiguous with the core part.

2. A hard austenitic stainless steel screw according to claim 1, in which the ultra hard surface layer (20) has a thickness of 15μm to 50μm and the inner hard layer (21) has a thickness of 30μm to 150μm.

3. A hard austenitic stainless screw according to claim 1 or 2 in which the part having the ultra hard surface layer remaining include the screw thread part and/or a drill tip part.

4. A method for manufacturing a hard austenitic stainless steel screw comprising: heating austenitic stainless steel screw base material in a nitriding atmosphere to form the surface layer into a hard nitrided layer comprising an ultra hard suface layer and an inner hard layer beneath contiguous with a core part of the screw; and removing the ultra hard surface layer from a predetermined part of the hard nitrided layer to expose the inner hard layer contiguous with the core part.

5. A method according to claim 4 further comprising, prior to heating the austenitic stainless steel screw base material in a nitriding atmosphere, holding it in a fluorine- or fluoride-containing gas atmosphere to form a fluorinated layer on the surface.

6. A method according to claim 4 or 5 in which removal of the ultra hard surface layer is by dipping in strong acid.

7. A method according to claim 4 or 5 in which removal of the ultra hard surface layer is by scouring.

## Patentansprüche

1. Harte Schraube aus austenitischem rostfreien Stahl, **dadurch gekennzeichnet**, daß eine harte nitrierte Schicht, enthaltend eine ultraharte Oberflächenschicht (20) und darunter eine innere, harte, an ein Kernteil (22) der Schraube angrenzende Schicht (21), an der Oberfläche einer Schraube aus austenitischem rostfreien Stahl angeordnet ist, wobei ein vorbestimmter Teil der ultraharten Oberflächenschicht der harten nitrierten Schicht entfernt worden ist, um nur die innere, harte, an das Kernteil angrenzende Schicht zu belassen.

2. Harte Schraube aus austenitischem rostfreien Stahl nach Anspruch 1, bei welcher die ultra harte Oberflächenschicht (20) eine Dicke von 15 bis 50 μm und die innere harte Schicht (21) eine Dicke von 30 bis 150 μm hat.

3. Harte Schraube aus austenitischem rostfreien Stahl nach Anspruch 1 oder 2, bei welcher der Teil auf dem die ultraharte Oberflächenschicht verblieben ist, dem Schraubengewindeteil und oder ein Bohrerspitzenteil einschließt.

4. Verfahren zur Herstellung einer harten Schraube aus austenitischem rostfreien Stahl umfassend: Erhitzen von Schraubengrundmaterial aus austenitischem rostfreiem Stahl in einer nitrierenden Atmosphäre, um die die Oberflächenschicht in eine harte nitrierte Schicht, enthaltend eine ultraharte Oberflächenschicht und darunter eine innere, harte, an ein Kernteil der Schraube angrenzende Schicht, umzuformen, und Entfernen der ultraharten Schicht von einem vorbestimmten Teil der harten nitrierten Schicht, um die innere, harte, an das Kernteil angrenzende freizulegen.

5. Verfahren nach Anspruch 4, ferner umfassend vor dem Erhitzen von Schraubengrundmaterial aus austenitischem rostfreien Stahl in einer nitrierenden Atmosphäre, das Halten in einer fluor- oder fluoridhaltigen Gasatmosphäre, um eine fluorierte Schicht auf der Oberfläche zu bilden.

6. Verfahren nach Anspruch 4 oder 5, bei welchen das Entfernen der ultraharten Schicht durch Tauchen in eine starke Säure erfolgt.

7. Verfahren nach Anspruch 4 oder 5, bei welchen das Entfernen der ultraharten Schicht durch Scheuern erfolgt.

## Revendications

1. Vis en acier inoxydable austénitique dure caractérisée en ce qu'une couche nitrurée dure comprenant une couche de surface ultradure (20) et une couche dure interne (21) au-dessous et de façon contiguë à une partie de noyau (22) de la vis, est disposée à la surface d'une vis en acier inoxydable austénitique, une partie prédéterminée de la couche de surface ultradure de la couche nitrurée dure ayant été mise à nu pour ne laisser que la couche dure interne contiguë à la partie de noyau.

2. Vis en acier inoxydable austénitique dure selon la revendication 1, dans laquelle la couche de surface ultradure (20) a une épaisseur de 15 µm jusqu'à 50 µm et la couche dure interne (21) a une épaisseur de 30 µm à 150 µm.

3. Vis en acier inoxydable austénitique dure selon la revendication 1 ou 2, dans laquelle la partie ayant la couche de surface restante ultradure comprend la partie de tête de vis et/ou une partie de pointe de perçage.

4. Procédé pour la fabrication d'une vis en acier inoxydable austénitique dure comprenant : le chauffage de la matière de base de la vis en acier inoxydable austénitique dans une atmosphère de nitruration pour former la couche de surface dans une couche nitrurée dure comprenant une couche de surface ultradure et une couche dure interne au-dessous et de façon contiguë à une partie de noyau de la vis ; et enlever la couche de surface ultradure d'une partie prédéterminée de la couche nitrurée dure pour mettre à nu la couche dure interne contiguë à la partie de noyau.

5. Procédé selon la revendication 4, comprenant de plus avant le chauffage de la matière de base de vis en acier inoxydable austénitique dans une atmosphère de nitruration, le maintien dans une atmosphère de gaz contenant du fluor ou du fluorure pour former une couche fluorée à la surface.

6. Procédé selon la revendication 4 ou 5, dans lequel l'enlèvement de la couche de surface ultradure s'effectue par immersion dans un acide fort.

7. Procédé selon la revendication 4 ou 5, dans lequel l'enlèvement de la couche de surface ultradure s'effectue par décapage.

14
2
3
4
13
P
6
11
10
11
7
M
8
5
18
1
16
17
N2
+
NF3
NH3
17
15

FIG. 1

20
21
22

F I G. 2

21
22

F I G. 3

23
21
22

F I G. 4

21
20
22

F I G. 5

(μA/cm²)
10³
10²
10¹
10⁰
Current density
B
A
-0.4
-0.2
0
0.2
0.4
0.6
0.8
1.0
1.2
Electric potential (Vvs SCE)

F I G. 6